(19) Europäisches Patentamt
European Patent Office
Office européen des brevets

(11) **EP 2 678 872 B1**

(12) **EUROPÄISCHE PATENTSCHRIFT**

(45) Veröffentlichungstag und Bekanntmachung des Hinweises auf die Patenterteilung:
**14.01.2015  Patentblatt 2015/03**

(51) Int Cl.:
*H01F 27/28* *(2006.01)*        *H01B 7/30* *(2006.01)*
*H02K 3/14* *(2006.01)*

(21) Anmeldenummer: **12705145.6**

(22) Anmeldetag: **23.02.2012**

(86) Internationale Anmeldenummer:
**PCT/EP2012/053051**

(87) Internationale Veröffentlichungsnummer:
**WO 2012/113853 (30.08.2012 Gazette 2012/35)**

(54) **KONTINUIERLICHER DRILLLEITER**

CONTINUOUSLY TRANSPOSED CONDUCTOR

CONDUCTEUR TRANSPOSÉ CONTINUELLEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2011  AT 2532011**

(43) Veröffentlichungstag der Anmeldung:
**01.01.2014  Patentblatt 2014/01**

(73) Patentinhaber: **Asta Elektrodraht GmbH**
**2755 Oed/Wiener Neustadt (AT)**

(72) Erfinder:
• **TRIMMEL, Thomas**
  **A-2824 Seebenstein (AT)**
• **TRIMMEL, Martin**
  **A-2824 Seebenstein (AT)**

(74) Vertreter: **Patentanwälte Pinter & Weiss OG**
**Prinz-Eugen-Straße 70**
**1040 Wien (AT)**

(56) Entgegenhaltungen:
EP-A1- 0 981 139    EP-A2- 0 133 220
EP-B1- 0 746 861    WO-A2-2011/009729
GB-A- 1 084 796

**Beschreibung**

Die gegenständliche Erfindung betrifft einen kontinuierlichen Drillleiter bestehend aus einer Mehrzahl einzelner, elektrisch isolierter Einzelleiter, bei dem jeweils zwei oder mehrere nebeneinander angeordnete Einzelleiter zu Einzelleitergruppen zusammengefasst und die Einzelleitergruppen verdrillt sind, wobei die Kanten jedes Einzelleiters abgerundet ausgeführt sind und einen Transformator mit einer Wicklung aus einem solchen Drillleiter.

Unter einem kontinuierlichen Drillleiter wird ein Drillleiter verstanden, der in großen Längen gefertigt wird, z.B. sind Längen von einigen tausend Metern keine Seltenheit, und die in weiterer Folge zu einer Wicklung einer elektrischen Maschine, z.B. eine Transformatorwicklung, verarbeitet werden. Durch den Wickelvorgang erfahren die Drillleiter eine starke Krümmung. Im Gegensatz werden Wicklungsstäbe bzw. Roebelstäbe mit geringer Länge manuell gefertigt und zu einer Wicklung einer elektrischen Maschine (z.B. ein Elektromotor oder Generator) zusammengebaut, indem die geraden Stäbe in Nuten am Rotor eingelegt werden und die axialen Enden der Stäbe anschließend auf bestimmte Weise miteinander verbunden werden, um die Wicklung zu bilden. Ein solcher Wicklungsstab wird dabei ebenfalls aus einer Reihe mit einander verdrillten Einzelleitern hergestellt, wobei ein fertiger Wicklungsstab in Zuge seiner Weiterverarbeitung aber niemals gekrümmt oder irgendwie sonst verbogen wird, sodass dessen verdrillten Teilleiter bzw. Teilleitergruppen dabei immer in Position bleiben. Es treten somit bei kontinuierlichen Drillleitern und bei Wicklungsstäben bei deren Weiterverarbeitung prinzipiell andere Problem auf, weshalb diese nicht direkt miteinander vergleichbar sind.

Bekannterweise treten bei Transformatoren vor allem an den äußeren der Wicklung elektromagnetische Radialfelder (Querfelder) auf, welche in den Wicklungsleitern Wirbelströme induzieren, die zu Wirbelstromverlusten führen. Wirbelstromverluste reduzieren den Wirkungsgrad des Transformators, führen aber auch zu lokal unerwünscht hohen Temperaturen, die wiederum zu einer Beschädigung der Wicklungsisolation führen kann. Durch die Verwendung von bekannten kontinuierlichen Drillleitern können solche Wirbelstromverluste reduziert werden. Drillleiter bestehen dabei aus einem Bündel von einzelnen, isolierten Teilleitern, die einzeln gegeneinander verdrillt werden, z.B. nach dem Roebelprinzip, wie z.B. in Fig. 1 dargestellt. Solche kontinuierliche Drillleiter sind z.B. aus der EP 746 861 B1 bekannt und werden dabei maschinell und automatisiert mit Längen von einigen tausend Metern hergestellt und zur Verschiffung auf Trommeln aufgewickelt. Drillleiter zeichnen sich insbesondere auch dadurch aus, dass diese ausreichend biegeweich sind, um zur Herstellung von Wicklungen gewickelt werden zu können.

Für Wicklungsstäbe bzw. Roebelstäbe ist es aus der AT 309 590 B auch bereits bekannt, die Verdrillung so vorzusehen, dass immer zwei benachbarte Teilleiter gemeinsam verdrillt werden. Damit soll neben dem Ausgleich des Längsfeldes durch die Verdrillung auch das sich bereits schädlich machende Radialfeld innerhalb einer Nut kompensiert werden. Roebelstäbe, die nach wie vor hauptsächlich manuell hergestellt werden, indem Teilleiter geringer Länge auf speziellen Werkbänken durch einen Arbeiter manuell verdrillt werden, können auf diese Weise einfach hergestellt werden, auch wenn zwei benachbarte Teilleiter gemeinsam verdrillt werden. Roebelstäbe werden jedoch nicht gewickelt, sondern es wird aus mehreren Roebelstäben eine Wicklung "gebaut", indem die Enden der Roebelstäbe entsprechend verbunden werden.

Die Anforderungen an heutige Transformatoren steigen jedoch immer mehr, zum Einen hinsichtlich Größe und Leistung und zum Anderen hinsichtlich Wirkungsgrad und Reduktion von Verlusten hervorgerufen z.B. durch Wirbelstromverluste. Speziell bei sehr großen leistungsstarken Transformatoren treten unerwünschte signifikante Wirbelstromverluste auf Grund der magnetischen Felder auf. Weiters ist die Reduktion der Hotspot Temperatur, das Spannungsverhalten und der Füllfaktor von großer Bedeutung in der Auslegung der Transformatorenwicklungen.

Bei derzeit bekannten Drillleitern ist durch deren Geometrie und Fertigungsmöglichkeit die Verbesserung der oben genannten Eigenschaften durch physikalische Grenzen im Drillleiter-Fertigungsprozess nicht möglich. Die Anzahl der möglichen Drillleiter-Einzelleiter, die zu einem Drillleiter verdrillt werden können, ist durch den sogenannten Verdrillfaktor limitiert. Der Verdrillfaktor $f_D$ wird durch folgende bekannte Berechnungsformel abhängig vom inneren Transformator-Wicklungsdurchmesser, der Anzahl der Einzelleiter des Drillleiters und der Breite des Einzelleiters beschrieben:

$$f_D = \frac{WD \cdot \pi}{n \cdot b_1}$$

Dabei bedeutet

WD    kleinster Wickeldurchmesser
n     Anzahl der Einzelleiter
$b_1$    Einzelleiterbreite

Durch die derzeitige Fertigungstechnologie ist es möglich Drillleiter bis zu einem minimalen Verdrillfaktor $f_D$=5 zu fertigen, wobei die Anzahl der Einzelleiter bzw. die Drahtbreite und Wicklungsdurchmesser in Abhängigkeit stehen. Diese fertigungstechnische Limitierung des Verdrillfaktors beschränkt die Herstellbarkeit der Drillleiter mit steigender Einzelleiteranzahl. In einer Transformatorenwicklung mit herkömmlichen Drillleitern ist weiters die Spannungsverteilung problematisch, da durch Spannungsdifferenzen zwischen den parallel geführten Drilleitern unerwünschte Kapazitäten entstehen. Außerdem entstehen signifikante Wirbelstromverluste und dadurch auch hohe Temperaturen im Drillleiter bzw. in der Wicklung.

Bei der Verwendung von einer Mehrzahl von Einzelleitern, die gemeinsam als Einzelleiterbündel zu einem Drillleiter verdrillt werden, können die entstehenden Wirbelstromverluste und damit die Hotspot Temperaturen reduziert werden. Ein solcher Drillleiter ist z.B. aus der EP 133 220 A2 bekannt, bei dem Seile aus einer Gruppe von runden Einzelleitern zu einem elektrischen Leiter verdrillt werden. Ähnliches zeigt die US 4 431 860 A, wobei die Einzelleiter der einzelnen Seile in sich wieder verdrillt sind. Damit kann die Einzelleiteranzahl erhöht werden und trotzdem die physikalische Limitierung des Drillfaktors mit fünf eingehalten werden. Bei der Verwendung von runden Einzelleitern, wie in der EP 133 220 A2 ergibt sich allerdings ein schlechter Füllfaktor, wodurch der Querschnitt des Drillleiters bei vorgegebenem Kupferquerschnitt unerwünscht groß wird. In einer Ausgestaltung der Seile können die runden Einzelleiter im Paket rechteckig verformt werden, was zwar den Füllfaktor etwas verbessert, allerdings einen zusätzlichen Arbeitsschritt benötigt und dadurch die Herstellung aufwendiger wird.

Die Drillleiter der EP 133 220 A2 und der US 4 431 860 A haben aber den entscheidenden Nachteil der aufwendigen Fertigung, da zuerst ein Teilleiter aus einer Anzahl von Einzelleitern durch Verdrillen der Einzelleiter gefertigt werden muss und erst dann die Teilleiter zum Drillleiter verdrillt werden. Damit ergibt sich zumindest ein zusätzlicher Arbeitsschritt mit allen damit verbundenen Nachteilen, wie Lagerung und Handhabung der Einzelleiter und der Teilleiter, verschiedene Verdrillanlagen, längere Produktionszeiten, etc. Deshalb hat man bisher eher davon abgesehen, in der Praxis solche Drillleiter nach dem Stand der Technik zu verwenden. Durch die Verdrillung der Einzelleiter innerhalb der Teilleiter erreichte man allerdings einen kompakten, in sich stabilen Teilleiter, in dem sich die Einzelleiter relativ zueinander nicht verschieben können und der so für die nachfolgende Verdrillung zum Drillleiter geeignet ist. Nur so konnten bisher Drillleiter mit Teilleitern aus mehreren Einzeldrähten gefertigt werden.

In heutigen Drillleitern für die Fertigung von Transformatorwicklungen kommen fast ausschließlich Einzelleiter mit rechteckigem Querschnitt zum Einsatz, deren Kanten abgerundet sind, wobei der Querschnitt eines Einzelleiters in der Regel im Bereich von einigen Quadratmillimetern liegen kann. Die Rundung der Kanten muss dabei, wie hinlänglich bekannt, aus elektrotechnischen Gründen ausreichend groß sein, um die elektrischen Feldstärken im Bereich der Kanten zu begrenzen und damit eine ausreichende Spannungsfestigkeit des Drillleiters zu erzielen und um den Isolationsaufwand der Einzelleiter in Grenzen zu halten.

Diese Rundungen beeinflussen damit auch den erzielbaren Füllfaktor bzw. den verfügbaren Leiterquerschnitt. Hier treffen somit zwei widersprüchliche Anforderungen aufeinander, nämlich ein erwünschter großer Radius zur Verbesserung der Spannungsfestigkeit und ein erwünschter kleiner Radius zur Erhöhung des Füllfaktors. Bei der Verwendung solcher Einzelleiter, die dann in Gruppen in einem Arbeitsschritt zu einem Drillleiter verdrillt werden, ergibt sich außerdem immer das Problem, dass sich die Einzelleiter beim Verdrillvorgang sehr einfach übereinander- oder untereinanderschieben können und der Drillleiter damit unbrauchbar wird. Daher konnten bislang mit bekannten Verdrillwerkzeugen nur herkömmliche Drillleiter hergestellt werden, also mit nur jeweils einzelnen verdrillten Einzelleitern. Es konnten aber bisher in einem kontinuierlichen Herstellprozess zur Herstellung eines kontinuierlichen Drillleiters nicht zwei oder mehrere nebeneinander liegende Einzelleiter in einem Arbeitsschritt gemeinsam verdrillt werden. Eine solche Herstellung eines Drillleiters war daher bisher aus produktionstechnischen Gründen nicht beherrschbar.

WO 2011/009729 A2 offenbart einen kontinuierlichen Drillleiter gemäß Oberbegriff von Anspruch 1. Ein kontinuierlicher Drillleiter ist auch in EP 0 981 139 A1 (Fig.7) offenbart.

Es ist daher eine Aufgabe der gegenständlichen Erfindung, einen Drillleiter mit gemeinsam verdrillten, nebeneinander liegenden Einzelleitern anzugeben, der eine einfache Herstellung, insbesondere in einem Arbeitsgang, ermöglicht und der eine ausreichende Spannungsfestigaufweist.

Diese Aufgabe wird erfindungsgemäß durch einen kontinuierlichen Drillleiter gemäß Anspruch 1 gelöst, wobei die Abrundung zumindest einer Kante eines Einzelleiters einer Einzelleitergruppe, die eine Berührfläche zwischen zwei nebeneinander liegenden Einzelleitern dieser Einzelleitergruppe begrenzt, mit einem kleineren Radius ausgeführt ist, als die Radien der Abrundungen der äußeren Kanten der Einzelleitergruppe. Durch diese Maßnahme erhöht sich die Fläche, an denen die Einzelleiter aneinander liegen, wodurch ein Übereinander- oder Untereinanderschieben der Einzelleiter beim Verdrillen, bei dem die Einzelleiter quer zu deren Längserstreckung verschoben werden müssen, verhindert wird, ohne dadurch die Spannungsfestigkeit des Drillleiters zu verschlechtern, da die äußeren Kanten dabei unverändert bleiben. Gleichzeitig wird dadurch auch der Leiterquerschnitt im Drillleiter erhöht, was den Füllfaktor positiv beeinflussen kann.

Bevorzugt werden die Abrundungen aller Kanten eines Einzelleiters einer Einzelleitergruppe, die eine Berührfläche zwischen zwei nebeneinander liegenden Einzelleitern begrenzen, mit einem kleineren Radius ausgeführt, als die Radien der Abrundungen der äußeren Kanten der Einzelleitergruppe. Bei mehr als zwei benachbarten Einzelleitern, werden bevorzugt die Abrundungen der Kanten aller Einzelleiter einer Einzelleitergruppe, die eine Berührfläche zwischen zwei nebeneinander liegenden Einzelleitern begrenzen, mit einem kleineren Radius ausgeführt, als die Radien der Abrundungen der äußeren Kanten der Einzelleitergruppe. Diese Maßnahmen machen den Verdrillprozess noch sicherer und Erhöhen den verfügbaren Leiterquerschnitt im Drillleiter noch weiter.

In einer weiteren vorteilhaften Ausgestaltung, werden die Einzelleiter in einer Einzelleitergruppe in einer n x n- oder n x m-Anordnung angeordnet und zumindest eine Kante eines Einzelleiters der Einzelleitergruppe, die eine Berührfläche zwischen zwei übereinander liegenden Einzelleitern begrenzt, mit einem kleineren Radius ausgeführt, als die Radien der Abrundungen der äußeren Kanten der Einzelleitergruppe. Dabei ist wieder besonders vorteilhaft, alle Kanten, die die Berührflächen der neben- und übereinanderliegenden Einzelleiter begrenzen, mit einem kleinerem Radius auszuführen, als die Radien der Abrundungen der äußeren Kanten der Einzelleitergruppe.

Wenn in einem erfindungsgemäßen Drillleiter die Dicke der Isolationsschicht eines Einzelleiters zwischen 0,03 und 0,08mm ausgeführt ist, kann der Füllfaktor eines solchen Drillleiters verbessert werden, da damit dem durch die größere Anzahl von Einzelleiter im Drillleiter bedingten erhöhten Lackanteil im Drillleiter wirkungsvoll durch eine Reduktion der Lackschicht entgegengewirkt werden kann.

Die Spannungsverteilung in einer bekannten Transformatorenwicklung mit herkömmlichen parallel gewickelten Drillleitern ist wesentlich schlechter als bei Verwendung von erfindungsgemäßen Drillleitern mit geteilten Einzelleitern. In herkömmlichen Transformatorwicklungen entstehen durch Spannungsdifferenzen der parallel geführten Drillleiter Kapazitäten, die bei der Verwendung eines erfindungsgemäßen Drillleiters mit geteilten Einzelleitern nicht auftreten, da die Einzelleiter im Gesamtbündel miteinander verdrillt werden. Weiters ergibt sich durch die Vereinigung der parallelen Drillleiter zu einem Drillleiter mit geteilten Einzelleitern in Summe eine Verbesserung des Füllfaktors und der Transformator wird kompakter in den Außenabmessungen. Somit ist die Verwendung eines erfindungsgemäßen Drillleiters in einer Transformatorwicklung besonders vorteilhaft.

Die gegenständliche Erfindung wird nachfolgend anhand der beispielhaften und nicht einschränkenden, vorteilhafte Ausgestaltungen zeigenden Figuren 1 bis 6 beschrieben. Dabei zeigt

Fig. 1 einen herkömmlichen Drillleiter nach dem Stand der Technik
Fig. 2 einen erfindungsgemäßen Drillleiter mit einer Einzelleitergruppe mit nebeneinander angeordneten Einzelleitern,
Fig. 3 einen Querschnitt durch eine Einzelleitergruppe
Fig. 4 einen Querschnitt durch einen erfindungsgemäßen Drillleiter,
Fig. 5 einen Querschnitt durch eine Einzelleitergruppe mit einer n x m-Anordnung von Einzelleitern und

Fig. 6 einen Querschnitt durch einen Drillleiter mit einer Teilleitergruppe mit einer n x m-Anordnung von Einzelleitern.

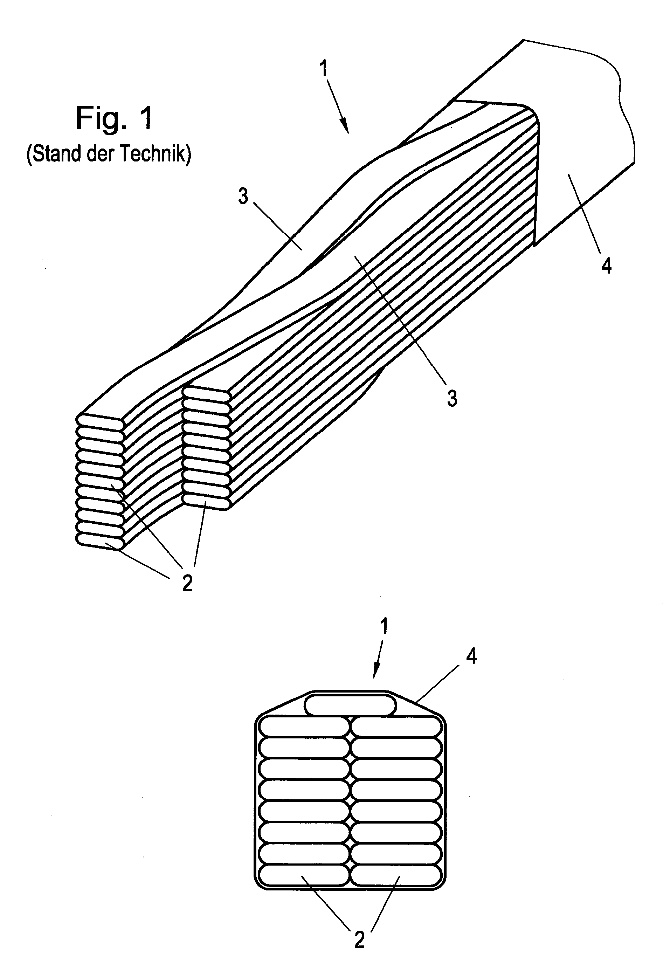

Fig. 1 zeigt einen hinlänglich bekannten Drillleiter 1 bestehend aus einer Anzahl von elektrisch isolierten Einzelleitern 2, die in zwei Einzelleiterstapeln 3 angeordnet sind. Die Einzelleiter 2 werden dabei bekanntermaßen so verdrillt, dass diese von der obersten in die unterste Lage wechseln. Ein Einzelleiter 2 hat dabei einen rechteckigen Querschnitt und abgerundete Kanten. Um das Zusammenhalten des Einzelleiterbündels zu einem Drillleiter 1 zu gewährleisten oder um den Drillleiter zu schützen, kann auch eine Umwicklung 4 durch ein Webband, einen Papierstreifen oder ähnlichem vorgesehen sein.

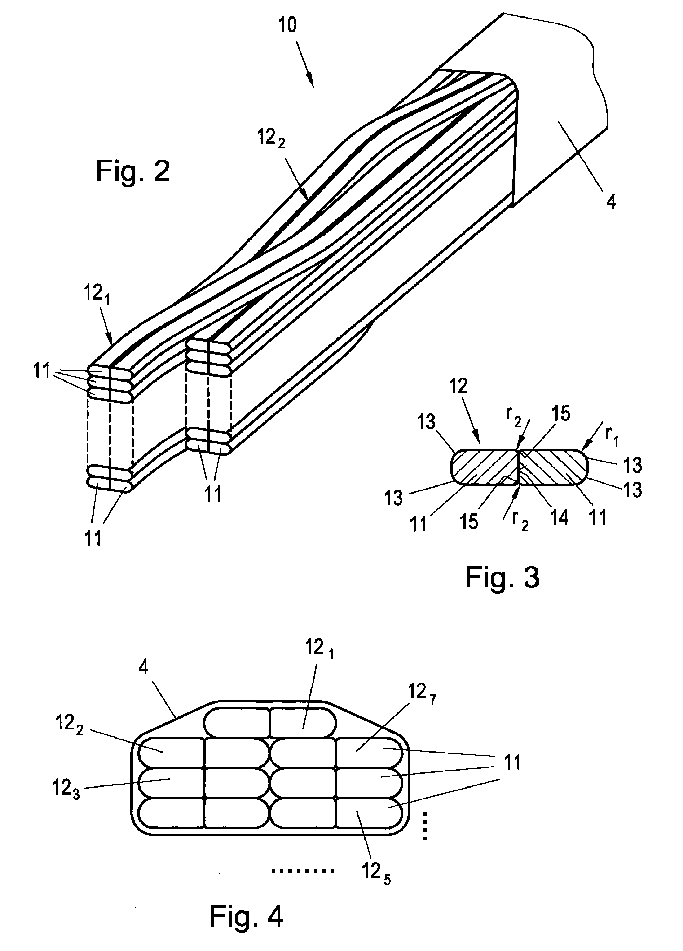

Ein erfindungsgemäßer kontinuierlicher Drillleiter 10 ist in Fig. 2 dargestellt, der aus einer Vielzahl von einzelnen elektrisch isolierten Einzelleitern 11 besteht. Bei diesem Drillleiter 10 werden jeweils zwei nebeneinander liegende Einzelleiter 11 zu einer Einzelleitergruppe 12 zusammengefasst und gemeinsam verdrillt. "Nebeneinander" bedeutet hierbei bei einem rechteckigen Einzelleiterquerschnitt, dass die Einzelleiter 11 im Querschnitt an ihrer Schmalseite an einer Berührfläche 14 aneinander liegend angeordnet sind, siehe Fig. 3. Bei einem quadratischen Querschnitt bedeutet "nebeneinander", dass die Einzelleiter quer zur Längserstreckung des Drillleiters 10 an einer Berührfläche 14 aneinander liegend angeordnet sind. Eine Einzelleitergruppe 12 könnte aber auch mehr als zwei nebeneinander angeordnete Einzelleiter 11 und damit mehrere Berührflächen 14 umfassen.

Der Drillleiter 10 kann dabei wieder mit einer Umwicklung 4, z.B. zum Schutz der Einzelleiter 11 beim Transport oder zur Stabilisierung des Drillleiters 10, umgeben sein.

Das Verdrillen wird dadurch möglich, indem die Radien $r_2$ der Abrundungen der Kanten 15, die die Berührfläche 14 (bezogen auf die Wicklung in axialer Richtung) der benachbarten Einzelleiter 11 der Einzelleitergruppe 12 begrenzen, kleiner sind, als die Abrundungen der äußeren Kanten 13 der Einzelleitergruppe, wie in Fig. 3 dargestellt. Die "äußeren" Kanten 13 sind dabei die Kanten des sich ergebenden rechteckigen (oder quadratischen) Querschnitts der Einzelleitergruppe 12. Grundsätzlich kann es auch schon ausreichend sein, überhaupt nur eine oder an jedem Einzelleiter 11 jeweils nur eine dieser Kanten 15 mit einem kleineren Radius $r_2$ abzurunden. Aus Sicht des Füllfaktors bzw. der Erhöhung des Leiterquerschnittes ist es aber besser, alle diese Kanten 15 der Einzelleiter 11 mit einem kleineren Radius $r_2$ abzurunden. Damit ergibt sich durch die kleinen Radien $r_2$ eine ausreichend große Berührfläche 14, die ein übereinander- oder untereinanderschieben der Einzelleiter 11 beim Verdrillvorgang, bei dem die Einzelleitergruppe 12 ja quer zur Längserstreckung verschoben werden muss, verhindert. Hingegen könnte bei den außen notwendigen

großen Radien $r_1$ die Einzelleiter sehr einfach an den Radien aneinander abgleiten und ein solches übereinander- oder untereinanderschieben der Einzelleiter 11 sehr einfach passieren, was den Verdrillvorgang praktisch unmöglich macht.

Mit dieser einfachen Maßnahme ist es nun möglich, einen Drillleiter 10 mit verdrillten Einzelleitergruppen 12 bestehend aus einer Anzahl von nebeneinander angeordneten Einzelleitern 11 in einem Arbeitsschritt herzustellen. Ein Querschnitt durch einen solchen Drillleiter 10 mit sieben Einzelleitergruppen $12_1$ bis $12_7$, bestehend aus jeweils zwei einzelnen nebeneinander angeordneten Einzelleitern 11 ist in Fig. 4 dargestellt. Der Drillleiter 10 kann dabei wieder mit einer Umwicklung 4, z.B. zum Schutz der Einzelleiter 11 beim Transport oder zur Stabilisierung des Einzelleiterbündels, umgeben sein.

Ein solcher Drillleiter 10 erfüllt aber auch die Anforderungen an die Spannungsfestigkeit, da die Abrundungen an den besonders kritischen äußeren Kanten 13 nicht verändert werden. Lediglich die innen liegenden Kanten, also die eine Berührfläche 14 begrenzenden Kanten 15, an denen die elektrischen Feldstärken kleiner sind, werden mit kleineren Abrundungen ausgeführt, was die Spannungsfestigkeit nicht beeinträchtigt, jedoch den Füllfaktor erhöht. Somit lassen sich durch diese einfache Maßnahme gleichzeitig auch die an sich widersprüchlichen Anforderungen der hohen Spannungsfestigkeit und des hohen Füllfaktors erfüllen.

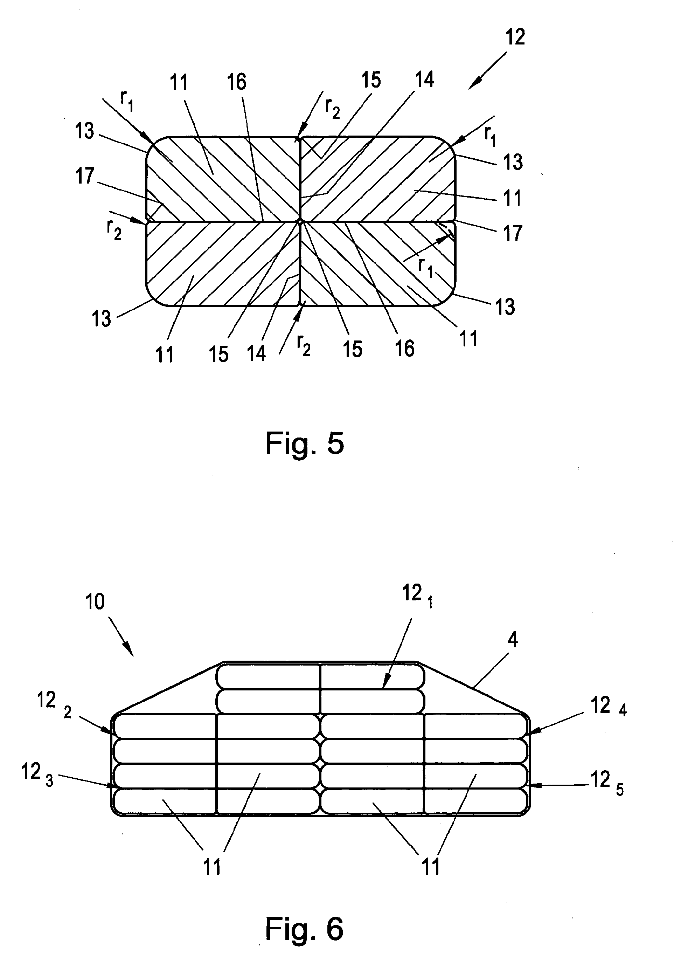

In einer anderen möglichen Ausgestaltung des erfindungsgemäßen Drillleiters 10 umfasst eine Einzelleitergruppe 12 mehrere neben- und übereinander angeordnete Einzelleiter 11, wie z.B. eine n x n-Anordnung von Einzelleitern 11, wie in Fig. 5 dargestellt, oder n x m-Anordnung von Einzelleitern 11. "Übereinander" bedeutet hierbei, dass die Einzelleiter 11 im Querschnitt an ihren Längsseiten aneinander liegend angeordnet sind. Die nebeneinander liegenden Einzelleiter 11 liegen dabei an einer Berührfläche 14 aneinander und die übereinander liegenden Einzelleiter 11 liegen an einer zweiten Berührfläche 16 (bezogen auf die Wicklung in radiale Richtung) aneinander. Erfindungsgemäß ist wiederum zumindest eine Abrundung einer Kante 15, die eine Berührfläche 14 zwischen zwei nebeneinander liegenden Einzelleitern 11 mit einem kleineren Radius $r_2$ ausgeführt, als die Radien $r_1$ der äußeren Kanten 13 der Einzelleitergruppe 12. In der bevorzugten Ausführung, wie in Fig. 5 dargestellt, sind wieder alle die Berührflächen 14 begrenzenden Kanten 15 mit diesem kleinerem Radius $r_2$ ausgeführt. Hier ist noch anzumerken, dass die Radien dieser Kanten 15 nicht alle gleich sein müssen, sondern erfindungsgemäß müssen diese lediglich kleiner als die Radien $r_1$ der äußeren Kanten 13 sein. Zusätzlich sind in der bevorzugten Ausgestaltung einer Einzelleitergruppe 12 auch die Kanten 17 der Berührflächen 16 zwischen zwei benachbarten übereinander liegenden Einzelleiter mit einem kleineren Radius $r_2$ ausgeführt. Die Radien dieser Kanten 17 könnten aber genauso groß sein, wie die Radien $r_1$ der äußeren Kanten 12, wie in Fig. 5 an einer Stelle strichliert angedeutet.

Ein Querschnitt durch einen solchen Drillleiter 10 mit fünf Teilleitergruppen $12_1$ bis $12_5$, bestehend aus 2 x 2 Einzelleitern 11 ist in Fig. 6 dargestellt. Der Drillleiter 10 kann dabei wieder mit einer Umwicklung 4, z.B. zum Schutz der Einzelleiter 11 beim Transport oder zur Stabilisierung des Einzelleiterbündels, umgeben sein.

Ein erfindungsgemäßer Drillleiter 10 kann nun auch besonders vorteilhaft in einer Transformatorwicklung eingesetzt werden, wobei ein erfindungsgemäß ausgeführter Drillleiter 10 zwei herkömmliche, parallel gewickelte Drillleiter (z.B. nach Fig. 1) ersetzen kann, da im erfindungsgemäßen Drillleiter 10 ja deutlich mehr, z.B. doppelt so viele, Einzelleiter 11 vorhanden sind.

Ein erfindungsgemäßer Drillleiter 10 hat bei gleichem Querschnitt einen geringeren Füllfaktor als ein herkömmlicher Drillleiter, da jeder Einzelleiter 11 isoliert sein muss und durch die größere Anzahl von Einzelleitern 11 natürlich auch mehr Isolation im Querschnitt vorhanden ist. Die Isolationsschicht eines Einzelleiters 11 ist laut anzuwendender Norm bei Grad 1 0,1mm und bei Grad 2 0,15mm. In heutigen Drillleitern kommt praktisch nur mehr die Güteklasse Grad 1 zur Anwendung. Um den Füllfaktor in einem erfindungsgemäßen Drillleiter 10 bei gleichem Querschnitt zu verbessern, kann vorgesehen sein, die Dicke der Isolationsschicht zu verringern, bevorzugt auf einen Bereich von 0,03 bis 0,08mm, vorzugsweise auch 0,06mm.

**Patentansprüche**

1. Kontinuierlicher Drillleiter (10) bestehend aus einer Mehrzahl einzelner, elektrisch isolierter Einzelleiter (11) wobei jeder Einzelleiter einen rechteckigen Querschnitt mit längs des Einzelleiters verlaufenden Kanten (13,15) aufweist und bei dem jeweils zwei oder mehrere nebeneinander angeordnete Einzelleiter (11) zu Einzelleitergruppen (12) zusammengefasst und die Einzelleitergruppen (12) verdrillt sind, wobei die Kanten (13, 15) jedes Einzelleiters (11) abgerundet ausgeführt sind, **dadurch gekennzeichnet, dass** die Abrundung zumindest einer Kante (15) eines Einzelleiters (11) einer Einzelleitergruppe (12), die eine Berührfläche (14) zwischen zwei nebeneinander liegenden Einzelleitern (11) dieser Einzelleitergruppe (12) begrenzt, mit einem kleinerem Radius ($r_2$) ausgeführt ist, als die Radien ($r_1$) der Abrundungen der äußeren Kanten (13) der Einzelleitergruppe (12).

2. Kontinuierlicher Drillleiter nach Anspruch 1, **dadurch gekennzeichnet, dass** die Abrundungen aller Kanten (15) eines Einzelleiters (11) einer Einzelleitergruppe (12), die eine Berührfläche (14) zwischen zwei nebeneinander liegenden Einzelleitern (11) begrenzen, mit einem kleinerem Radius ($r_2$) ausgeführt sind, als die Radien ($r_1$) der Abrundungen

der äußeren Kanten (13) der Einzelleitergruppe (12).

3. Kontinuierlicher Drilleiter nach Anspruch 1, **dadurch gekennzeichnet, dass** die Abrundungen aller Kanten (15) aller Einzelleiter (11) einer Einzelleitergruppe (12), die eine Berührfläche (14) zwischen zwei nebeneinander liegenden Einzelleitern (11) begrenzen, mit einem kleinerem Radius ($r_2$) ausgeführt sind, als die Radien ($r_1$) der Abrundungen der äußeren Kanten (13) der Einzelleitergruppe (12).

4. Kontinuierlicher Drillleiter nach einem der Ansprüche 1 bis 3, **dadurch gekennzeichnet, dass** die Einzelleiter (11) in einer Einzelleitergruppe (12) in einer n x n- oder n x m-Anordnung angeordnet sind und zumindest eine Kante (15) eines Einzelleiters (11) der Einzelleitergruppe (12), die eine Berührfläche (16) zwischen zwei übereinander liegenden Einzelleitern (11) begrenzt, mit einem kleinerem Radius ($r_2$) ausgeführt ist, als die Radien ($r_1$) der Abrundungen der äußeren Kanten (13) der Einzelleitergruppe.

5. Kontinuierlicher Drillleiter nach Anspruch 4, **dadurch gekennzeichnet, dass** alle Kanten (15), die die Berührflächen (14, 16) der neben- und übereinanderliegenden Einzelleiter (11) begrenzen, mit einem kleinerem Radius ($r_2$) ausgeführt ist, als die Radien ($r_1$) der Abrundungen der äußeren Kanten (13) der Einzelleitergruppe (12).

6. Kontinuierlicher Drillleiter nach einem der Ansprüche 1 bis 5, **dadurch gekennzeichnet, dass** die Dicke der Isolationsschicht eines Einzelleiters (11) zwischen 0,03mm und 0,08mm, vorzugsweise 0,06mm, ausgeführt ist.

7. Transformator mit einer Wicklung aus einem kontinuierlichen Drillleiter (10) nach einem der Ansprüche 1 bis 6.

## Claims

1. A continuously transposed conductor (10) comprising a plurality of individual, electrically insulated single conductors (11), wherein each single conductor has a rectangular cross section with edges (13, 15) extending along said single conductor, and wherein in each case two or more single conductors (11), which are arranged next to each other, are combined to single conductor groups (12) and the single conductor groups (12) are transposed, wherein the edges (13, 15) of each single conductor (11) have been rounded, **characterized in that** the rounding of at least one edge (15) of a single conductor (11) of a single conductor group (12), which delimits a contact surface (14) between two single conductors (11) of this single conductor group (12), which are lying next to each other, is realized with a smaller radius ($r_2$) than the radii ($r_1$) of the rounded outer edges (13) of the single conductor group (12).

2. The continuously transposed conductor as claimed in claim 1, **characterized in that** all the rounded edges (15) of a single conductor (11) of a single conductor group (12), which delimit a contact surface (14) between two single conductors (11) lying next to each other, are realized with a smaller radius ($r_2$) than the radii ($r_1$) of the rounded outer edges (13) of the single conductor group (12).

3. The continuously transposed conductor as claimed in claim 1, **characterized in that** all the rounded edges (15) of all the single conductors (11) of a single conductor group (12), which delimit a contact surface (14) between two single conductors (11) lying next to each other, are realized with a smaller radius ($r_2$) than the radii ($r_1$) of the rounded outer edges (13) of the single conductor group (12).

4. The continuously transposed conductor as claimed in any one of claims 1 to 3, **characterized in that** the single conductors (11) in one single conductor group (12) are arranged in an n x n or n x m array, and at least one edge (15) of a single conductor (11) of the single conductor group (12), which delimits a contact surface (16) between two single conductors (11) lying above each other, is realized with a smaller radius ($r_2$) than the radii ($r_1$) of the rounded outer edges (13) of the single conductor group.

5. The continuously transposed conductors as claimed in claim 4, **characterized in that** all the edges (15) that delimit the contact surfaces (14, 16) of the single conductors (11) which lie next to each other or above each other, are realized with a smaller radius ($r_2$) than the radii ($r_1$) of the rounded outer edges (13) of the single conductor group (12).

6. The continuously transposed conductor as claimed in any one of claims 1 to 5, **characterized in that** the thickness of the insulation layer of a single conductor (11) is between 0.03 mm and 0.08 mm, preferably 0.06 mm.

7. A transformer having a winding made from a continuously transposed conductor (10) as claimed in any one of claims 1 to 6.

## Revendications

1. Guide-mèches continu (10) constitué d'une pluralité de guides individuels (11) électriquement isolés, dans lequel chaque guide individuel présente une section transversale rectangulaire avec des arêtes (13, 15) s'étendant dans la longueur du guide individuel, et dans lequel deux ou plusieurs guides individuels (11) agencés côte à côte sont respectivement rassemblés en groupes de guides individuels (12), et les groupes de guides individuels (12) sont entortillés, les arêtes (13, 15) de chaque guide individuel (11) étant conçues arrondies, **caractérisé en ce que** l'arrondissement d'au moins une arête (15) d'un guide individuel (11) d'un groupe de guides individuels (12) délimitant une surface de contact (14) entre deux guides individuels (11) adjacents de ce groupe de guides individuels (12) est conçue avec un rayon plus petit ($r_2$) que les rayons ($r_1$) des arrondissements des arêtes extérieures (13) du groupe de guides individuels (12).

2. Guide-mèches continu selon la revendication 1, **caractérisé en ce que** les arrondissements de toutes les arêtes (15) d'un guide individuel (11) d'un groupe de guides individuels (12) délimitant une surface de contact (14) entre deux guides individuels (11) adjacents sont conçues avec un rayon plus petit ($r_2$) que les rayons ($r_1$) des arrondissements des arêtes extérieures (13) du groupe de guides individuels (12).

3. Guide-mèches continu selon la revendication 1, **caractérisé en ce que** les arrondissements de toutes les arêtes (15) de tous les guides individuels (11) d'un groupe de guides individuels (12) délimitant une surface de contact (14) entre deux guides individuels (11) adjacents sont conçues avec un rayon plus petit ($r_2$) que les rayons ($r_1$) des arrondissements des arêtes extérieures (13) du groupe de guides individuels (12).

4. Guide-mèches continu selon l'une des revendications 1 à 3, **caractérisé en ce que** les guides individuels (11) dans un groupe de guides individuels (12) sont arrangés selon un arrangement de n x n ou de n x m, et au moins une arête (15) d'un guide individuel (11) du groupe de guides individuels (12) délimitant une surface de contact (16) entre deux guides individuels (11) superposés est conçue avec un rayon plus petit ($r_2$) que les rayons ($r_1$) des arrondissements des arêtes extérieures (13) du groupe de guides individuels.

5. Guide-mèches continu selon la revendication 4, **caractérisé en ce que** toutes les arêtes (15) délimitant les surfaces de contact (14, 16) des guides individuels (11) adjacents et superposés sont conçues avec un rayon plus petit ($r_2$) que les rayons ($r_1$) des arrondissements des arêtes extérieures (13) du groupe de guides individuels (12).

6. Guide-mèches continu selon l'une des revendications 1 à 5, **caractérisé en ce que** l'épaisseur de la couche d'isolation d'un guide individuel (11) mesure entre 0,03 mm et 0,08 mm, de préférence 0,06 mm.

7. Transformateur avec un enroulement à partir d'un guide-mèches continu (10) selon l'une des revendications 1 à 6.

# Fig. 1
(Stand der Technik)

10

12₂

Fig. 2

12₁

11

11

11

11

4

12

13

r₂

15

r₁

13

13

13

11

15

r₂

14

11

Fig. 3

12₁

4

12₇

12₂

12₃

11

12₅

Fig. 4

## Fig. 5

## Fig. 6

**EP 2 678 872 B1**

**IN DER BESCHREIBUNG AUFGEFÜHRTE DOKUMENTE**

**In der Beschreibung aufgeführte Patentdokumente**

- EP 746861 B1
- AT 309590 B
- EP 133220 A2
- US 4431860 A
- WO 2011009729 A2
- EP 0981139 A1